# EUROPEAN PATENT SPECIFICATION

(11) **EP 1 642 752 B1**
(45) Date of publication and mention of the grant of the patent: **14.01.2009**
(21) Application number: 05016213.0
(22) Date of filing: 26.07.2005
(51) Int. Cl.: B60C 9/20

(54) **Radial tyre for motorcycle**
Radialer Motorradluftreifen
Pneumatique radial pour motocyclette

(30) Priority: 01.10.2004 JP 2004290265
(43) Date of publication of application: 05.04.2006
(73) Proprietor: Sumitomo Rubber Industries, Ltd., Kobe-shi, Hyogo-ken (JP)
(72) Inventor: IlO, Nobumitsu Sumitomo Rubber Industries, Ltd., Kobe-shi Hyogo 651-0072 (JP)
(74) Representative: Manitz, Finsterwald & Partner GbR

(56) References cited:
- EP-A- 0 779 163
- US-A- 5 301 730

## Description

### BACKGROUND OF THE INVENTION

### Field of the Invention

The present invention relates to a pneumatic radial tire which is to be attached to a motorcycle. More particularly, the present invention relates to an improvement in a belt of a tire.

### Description of the Related Art

A conventional radial tire for a motorcycle comprises a belt formed by two cut plies between a carcass and a tread. Each of the cut plies includes a cord inclined at an angle of 15 to 40 degrees with respect to a circumferential direction. The cord of a first cut ply is inclined in a reverse direction to that of a second cut ply about an equator plane. In recent years, the motorcycle has a high performance and can carry out high speed running. The tire comprising the cut ply has an insufficient stability during the high speed straight running.

Japanese Laid-Open Patent Publications Nos. Hei 7-708803 and 2002-154306 have disclosed a radial tire comprising a belt having a cord wound spirally and extended substantially in a circumferential direction. The belt contributes to the straight running stability.

A motorcycle carries out cornering against a centrifugal force through a camber thrust generated by an inclination to the inside. In respect of a cornering performance, a tire for the motorcycle is required to have a high lateral stiffness. The belt including a cord wound spirally less contributes to the lateral stiffness. The tire comprising the belt has an insufficient cornering performance.

There has also been proposed a tire in which a cut ply is provided on a ply including the cord wound spirally. Also in this tire, a balance of a straight running stability and a cornering performance is not sufficient.

EP-A- 779 163 discloses a radial tire comprising the features of the preamble of claim 1.

It is an object of the present invention to provide a radial tire for a motorcycle which is excellent in a straight running stability and a cornering performance.

### SUMMARY OF THE INVENTION

A radial tire for a motorcycle according to the present invention comprises a tread having an external surface to form a tread surface, a pair of sidewalls extended almost inward in a radial direction from an end of the tread, a pair of beads extended almost inward in the radial direction from the sidewalls, a carcass laid between both of the beads along insides of the tread and the sidewalls, and a belt laminated on the carcass at an inside of the tread in the radial direction. The carcass includes a carcass cord having an angle with respect to a circumferential direction which is equal to or greater than 40 degrees and is equal to or smaller than 90 degrees. A ratio of a width of the belt to that of the tread is equal to or higher than 80% and is equal to or lower than 100%. The belt includes a first belt ply, a second belt ply positioned on an outside in the radial direction of the first belt ply, and a third belt ply positioned on an outside in the radial direction of the second belt ply. The first belt ply includes a first cord having an angle with respect to the circumferential direction which is equal to or greater than 15 degrees and is equal to or smaller than 40 degrees. The second belt ply includes a second cord having an angle with respect to the circumferential direction which is equal to or greater than 15 degrees and is equal to or smaller than 40 degrees and inclined in a reverse direction to the first cord about an equator plane. The third belt ply includes a third cord wound spirally and extended substantially in the circumferential direction.

In this tire, the first belt ply and the second belt ply contribute to a cornering performance and the third belt ply contributes to a straight running stability. In this tire, the straight running stability and the cornering performance are compatible with each other.

It is preferable that the carcass cord should be formed by a nylon fiber or a polyethylene naphthalate fiber, the first cord and the second cord should be formed by the nylon fiber, an aramid fiber, a glass fiber or a carbon fiber, and the third cord should be formed by the aramid fiber, the carbon fiber or steel.

It is preferable that a width of the second belt ply should be greater than that of the first belt ply and a width of the third belt ply should be greater than that of the second belt ply. A whole surface of the first belt ply is covered with the second belt ply. A whole surface of the second belt ply is covered with the third belt ply.

### BRIEF DESCRIPTION OF THE DRAWINGS

Fig. 1 is a sectional view showing a part of a radial tire for a motorcycle according to an embodiment of the present invention,
Fig. 2 is an enlarged exploded perspective view showing a part of a belt in the tire of Fig. 1, and
Fig. 3 is an enlarged sectional view showing a part of the belt in the tire of Fig. 1.

### DESCRIPTION OF THE PREFERRED EMBODIMENTS

The present invention will be described below in detail based on a preferred embodiment with reference to the drawings.

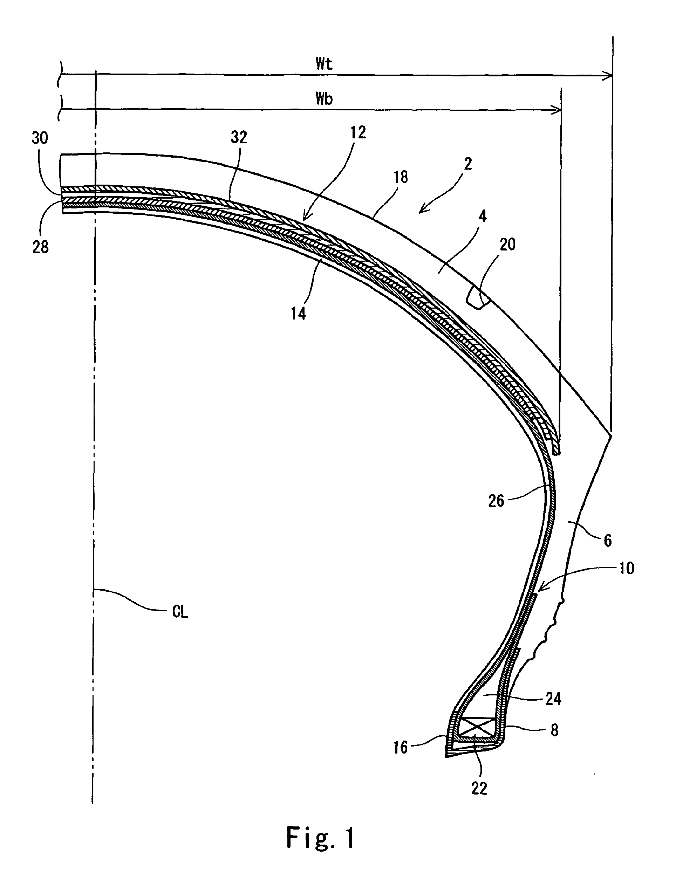

In Fig. 1, a vertical direction is set to be a radial direction of a tire 2, a transverse direction is set to be an axial direction of the tire 2, and a perpendicular direction to a paper is set to be a circumferential direction of the tire 2. The tire 2 takes an almost symmetrical shape about an equator plane CL. The tire 2 comprises a tread 4, a sidewall 6, a bead 8, a carcass 10, a belt 12, an inner liner 14, and a chafer 16. The tire 2 is a pneumatic type and a tubeless type.

The tread 4 is formed by a crosslinked rubber and takes the shape of an outward convex in the radial direction. The tread 4 forms a tread surface 18 to come in contact with a road surface. A groove 20 is provided on the tread surface 18. A tread pattern is formed by the groove 20. The groove 20 does not need to be formed.

The sidewall 6 is extended almost inward in the radial direction from the end of the tread 4. The sidewall 6 is formed by a crosslinked rubber. The sidewall 6 absorbs a shock from the road surface by a flexure. Moreover, the sidewall 6 prevents the external damage of the carcass 10.

The bead 8 is extended almost inward in the radial direction from the sidewall 6. The bead 8 includes a core 22 and an apex 24 extended outward in the radial direction from the core 22. The core 22 is ring-shaped and includes a plurality of non-extensible wires (typically, wires formed of steel). The apex 24 is outward tapered in the radial direction and is formed by a crosslinked rubber having a high hardness.

The carcass 10 is constituted by a carcass ply 26. The carcass ply 26 is laid between the beads 8 on both sides along the insides of the tread 4 and the sidewall 6. The carcass ply 26 is wound from an inside toward an outside in the axial direction around the core 22. The carcass ply 26 is constituted by a cord and a topping rubber, which is not shown. The absolute value of an angle formed by the cord with respect to the circumferential direction is usually 40 to 90 degrees, and particularly 75 to 90 degrees. The cord of the carcass 10 is usually constituted by an organic fiber. Examples of a preferable organic fiber include a nylon fiber, a polyethylene naphthalate fiber, a polyester fiber, a rayon fiber, and an aramid fiber. In respect of a shock absorption and a handling response, the nylon fiber and the polyethylene naphthalate fiber are preferred.

The belt 12 is positioned on an outside in the radial direction of the carcass 10. The belt 12 is provided on the carcass 10. The belt 12 reinforces the carcass 10. The belt 12 is constituted by a first belt ply 28, a second belt ply 30 and a third belt ply 32. The second belt ply 30 is positioned on an outside in the radial direction of the first belt ply 28. The third belt ply 32 is positioned on an outside in the radial direction of the second belt ply 30.

The inner liner 14 is bonded to the inner peripheral surface of the carcass 10. The inner liner 14 is formed by a crosslinked rubber. A rubber having a small air transmittance is used for the inner liner 14. The inner liner 14 plays a part in holding the internal pressure of the tire 2.

The chafer 16 is positioned in the vicinity of the bead 8. When the tire 2 is incorporated in a rim, the chafer 16 abuts on the rim. By the abutment, the vicinity of the bead 8 is protected. The chafer 16 is usually constituted by a cloth and a rubber impregnated into the cloth. It is also possible to use the chafer 16 formed by a rubber only.

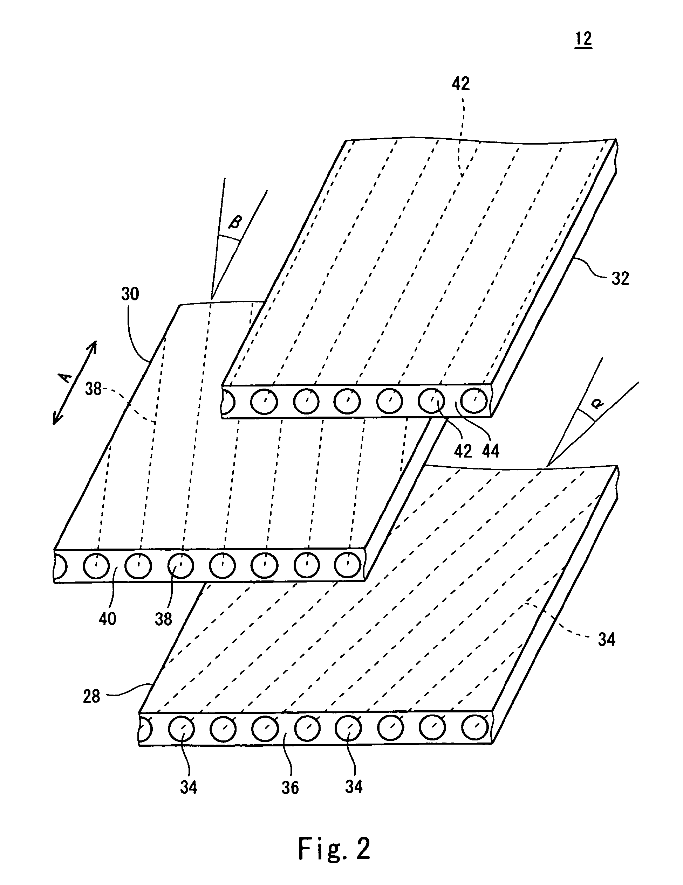

Fig. 2 is an enlarged exploded perspective view showing a part of the belt 12 in the tire 2 of Fig. 1. In Fig. 2, an arrow A indicates the circumferential direction of the tire 2. Fig. 2 shows the first belt ply 28, the second belt ply 30 and the third belt ply 32.

The first belt ply 28 is formed by a first cord 34 and a topping rubber 36. The first cord 34 is inclined with respect to the circumferential direction. In Fig. 2, α denotes an angle of the first cord 34 with respect to the circumferential direction. The absolute value of the angle *α* is equal to or greater than 15 degrees and is equal to or smaller than 40 degrees.

The second belt ply 30 is formed by a first cord 38 and a topping rubber 40. The second cord 38 is inclined with respect to the circumferential direction. In Fig. 2, β denotes an angle of the second cord 38 with respect to the circumferential direction. The absolute value of the angle *β* is equal to or greater than 15 degrees and is equal to or smaller than 40 degrees. As is apparent from Fig. 2, the second cord 38 is inclined in a reverse direction to the first cord 34 about an equator plane.

The lateral stiffness of the tire 2 is increased by the first cord 34 and the second cord 38 which are inclined with respect to the circumferential direction. In the tire 2, a great camber thrust is obtained. The tire 2 is excellent in a cornering performance. In respect of the cornering performance, it is more preferable that the angles *α* and β should be equal to or greater than 20 degrees. In respect of a following property to a road surface, it is more preferable that the angles *α* and β should be equal to or smaller than 35 degrees.

The materials of the first cord 34 and the second cord 38 include a nylon fiber, an aramid fiber, a polyethylene naphthalate fiber, a polyester fiber, a rayon fiber, a glass fiber and a carbon fiber. In respect of the cornering performance, the nylon fiber, the aramid fiber, the glass fiber and the carbon fiber are preferred.

In respect of the cornering performance, the finenesses of the first cord 34 and the second cord 38 are preferably equal to or greater than 940 dtex and are particularly preferably equal to or greater than 940/2 dtex. In respect of the following property to a road surface, the finenesses of the first cord 34 and the second cord 38 are preferably equal to or smaller than 2100/2 dtex and are particularly preferably equal to or smaller than 1670/2 dtex.

In respect of the cornering performance, it is preferable that the densities of the first cord 34 and the second cord 38 (the numbers of the cords per 5 cm) should be equal to or greater than 35 ends. In respect of the following property to a road surface, it is preferable that the densities of the first cord 34 and the second cord 38 should be equal to or smaller than 70 ends.

The third belt ply 32 is formed by a third cord 42 and a topping rubber 44. The third belt ply 32 is obtained by spirally winding a ribbon constituted by at least one third cord 42 extended in a longitudinal direction and the topping rubber 44. The third cord 42 is extended substantially in a circumferential direction. An angle with respect to the circumferential direction of the third cord 42 is equal to or smaller than 5 degrees, and is particularly equal to or smaller than 2 degrees. The third cord 42 has a so-called jointless structure. The third cord 42 contributes to the straight running stability of the tire 2. The third cord 42 also contributes to the driving performance and braking performance of the tire 2. The preferable material of the third cord 42 includes an aramid fiber, a carbon fiber and steel.

In respect of the straight running stability, the fineness of the third cord 42 is preferably equal to or greater than 1500 dtex and is particularly preferably equal to or greater than 1500/2 dtex. In respect of the cornering performance, the fineness of the third cord 42 is preferably equal to or smaller than 1670/3 dtex and is particularly preferably equal to or smaller than 1670/2 dtex.

In respect of the straight running stability, it is preferable that the density of the third cord 42 should be equal to or greater than 25 ends. In respect of the cornering performance, it is preferable that the density of the third cord 42 should be equal to or smaller than 70 ends.

In Fig. 1, an arrow Wt indicates a width of the tread 4 and an arrow Wb indicates a width of the belt 12. The widths Wt and Wb are measured in an axial direction. In respect of the compatibility of the straight running stability with the cornering performance, a ratio of the width Wb of the belt 12 to the width Wt of the tread 4 is preferably equal to or higher than 80% and is more preferably equal to or higher than 85%. The ratio has an upper limit of 100%.

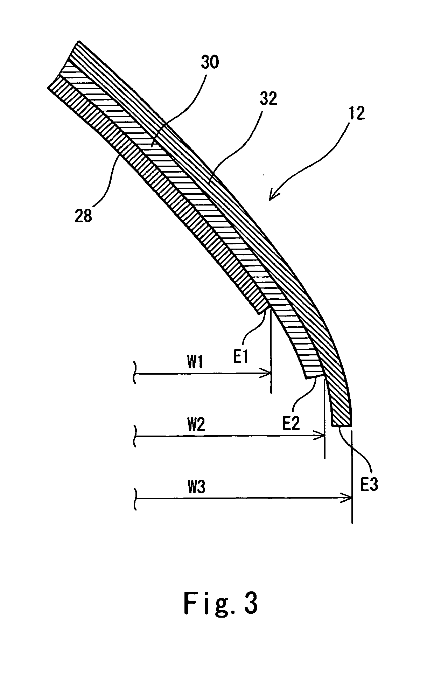

Fig. 3 is an enlarged sectional view showing a part of the belt 12 in the tire 2 of Fig. 1. In Fig. 3, a transverse direction indicates the axial direction of the tire 2. Fig. 3 shows the first belt ply 28, the second belt ply 30 and the third belt ply 32. In Fig. 3, an arrow W1 indicates a width of the first belt ply 28, an arrow W2 indicates a width of the second belt ply 30, and an arrow W3 indicates a width of the third belt ply 32. The widths W1, W2 and W3 are measured in the axial direction. The width W2 of the second belt ply 30 is greater than the width W1 of the first belt ply 28. The width W3 of the third belt ply 32 is greater than the width W2 of the second belt ply 30. An end E2 of the second belt ply 30 is positioned on the outside of an end E1 of the first belt ply 28 in the axial direction. In other words, the whole surface of the first belt ply 28 is covered with the second belt ply 30. An end E3 of the third belt ply 32 is positioned on the outside of the end E2 of the second belt ply 30 in the axial direction. In other words, the whole surface of the second belt ply 30 is covered with the third belt ply 32. The tire 2 comprising the belt 12 having such a structure is excellent in the straight running stability and the cornering performance.

In the present invention, the dimension and the angle are measured in a state in which the tire 2 is incorporated in a normal rim and the tire 2 is filled with air to obtain a normal internal pressure. During the measurement, a load is not applied to the tire 2. In this specification, the normal rim implies a rim determined in rules on which the tire 2 depends. A "standard rim" in the JATMA rules, a "Design Rim" in the TRA rules and a "Measuring Rim" in the ETRTO rules are included in the normal rim. In this specification, the normal internal pressure implies an internal pressure determined in the rules on which the tire 2 depends. A "maximum air pressure" in the JATMA rules, a "maximum value" described in "TIRE LOAD LIMITS AT VARIOUS COLD INFLATION PRESSURES" in the TRA rules and an "INFLATION PRESSURE" in the ETRTO rules are included in the normal internal pressure.

### EXAMPLES

### [Experiment 1]

### [Example 1]

A radial tire for a motorcycle having the structure shown in Figs. 1 to 3 was fabricated. The tire has a size of "185/55ZR17". A carcass includes a cord formed by a nylon fiber and having an angle of 90 degrees with respect to a circumferential direction. A first belt ply includes a first cord formed by an aramid fiber and having an angle *α* of 25 degrees. A second belt ply includes a second cord formed by the aramid fiber and having an angle *β* of 25 degrees. The first cord and the second cord have a fineness of 1500/2 dtex. The first cord and the second cord have a density of 35 ends. The third belt ply includes a third cord formed by the aramid fiber and wound spirally. The third cord has a fineness of 1500/2 dtex. The third cord has a density of 50 ends. A ratio of a width Wb of a belt to a width Wt of a tread is 90%.

### [Example 2]

A tire according to an example 2 was obtained in the same manner as that in the example 1 except that the materials of a first cord and a second cord were set as shown in the following Table 1.

### [Comparative Example 1]

A tire according to a comparative example 1 was obtained in the same manner as that in the example 1 except that a third belt ply was not provided.

### [Running Test]

A tire was attached to the rear wheel of a motorcycle having a displacement of 600 cm³. The motorcycle was caused to run over a circuit course for a race having a distance of 5 km to measure a lap time. The result is shown in the following Table 1.

**Table 1 Result of evaluation**

| | | Example 1 | Example 2 | Compara. example 1 |
|---|---|---|---|---|
| First belt ply | Structure | Cut ply | Cut ply | Cut ply |
| | Angle with respect to circumferential direction of cord α (degree) | 25 | 25 | 25 |
| | Material of cord | Aramid | Ny l on | Aramid |
| Second belt ply | Structure | Cut ply | Cut ply | Cut ply |
| | Angle with respect to circumferential direction of cord β (degree) | 25 | 25 | 25 |
| | Material of cord | Aramid | Ny l on | Aramid |
| Third belt ply | Structure | Spiral | Spiral | - |
| | Angle with respect to circumferential direction of cord (degree) | Approximately 0 | Approximately 0 | - |
| | Material of cord | Aramid | Aramid | - |
| Lap time | | 2'19" | 2'18" | 2'20" |

As shown in the Table 1, the tire according to each of the examples has a shorter lap time than that according to the comparative example. The reason is that the tire according to each of the examples is excellent in a straight running stability and a cornering performance.

### [Experiment 2]

### [Example 3]

A radial tire for a motorcycle having the structure shown in Figs. 1 to 3 was fabricated. The tire has a size of "195/65R17". A carcass includes a cord formed by a polyethylene naphthalate fiber and having an angle of 90 degrees with respect to a circumferential direction. A first belt ply includes a first cord formed by an aramid fiber and having an angle α of 35 degrees. A second belt ply includes a second cord formed by the aramid fiber and having an angle *β* of 35 degrees. The first cord and the second cord have a fineness of 1500/2 dtex. The first cord and the second cord have a density of 35 ends. The third belt ply includes a third cord formed by the aramid fiber and wound spirally. The third cord has a fineness of 1500/2 dtex. The third cord has a density of 50 ends. A ratio of a width Wb of a belt to a width Wt of a tread is 90%.

### [Example 4]

A tire according to an example 4 was obtained in the same manner as that in the example 3 except that a cord formed by a nylon fiber and having a fineness of 940/2 dtex was used as a first cord and a second cord, the first cord and the second cord were set to have a density of 50 ends, and the first cord and the second cord were set to have angles as shown in the following Table 2.

### [Comparative Example 2]

A tire according to a comparative example 2 was obtained in the same manner as that in the example 3 except that a first cord and a second cord were set to have angles as shown in the following Table 2 and a third belt ply was not provided.

### [Comparative Example 3]

A tire according to a comparative example 3 was obtained in the same manner as that in the example 3 except that a first belt ply and a second belt ply were not provided and steel was used as a third cord.

### [Comparative Example 4]

A tire according to a comparative example 4 was obtained in the same manner as that in the example 3 except that a cord formed by steel and wound spirally was used for a first belt ply and a cord formed by an aramid fiber and having an angle of 25 degrees with respect to a circumferential direction was used for a second belt ply and a third belt ply.

### [Running Test]

A tire was attached to the rear wheel of a motorcycle having a displacement of 1000 cm³. The motorcycle was caused to run over a circuit course for a race having a distance of 5 km to measure a lap time. The result is shown in the following Table 2.

**Table 2 Result of evaluation**

| | | Example 3 | Example 4 | Compara. example 2 | Compara. example 3 | Compara. example 4 |
|---|---|---|---|---|---|---|
| First belt ply | Structure | Cut ply | Cut ply | Cut ply | - | Spiral |
| | Angle with respect to circumferential direction of cord α (degree) | 35 | 25 | 20 | - | Approximately 0 |
| | Material of cord | Aramid | Nylon | Aramid | - | Steel |
| Second belt ply | Structure | Cut ply | Cut ply | Cut ply | - | Cut ply |
| | Angle with respect to circumferential direction of cord β (degree) | 35 | 25 | 20 | - | α :25 |
| | Material of cord | Aramid | Nylon | Aramid | - | Aramid |
| Third belt ply | Structure | Spiral | Spiral | - | Spiral | Cut ply |
| | Angle with respect to circumferential direction of cord (degree) | Approximately 0 | Approximately 0 | - | Approximately 0 | β:25 |
| | Material of cord | Aramid | Aramid | - | Steel | Aramid |
| Lap time | | 2'14.5" | 2'13.5" | 2'15" | 2'17" | 2'15" |

As shown in the Table 2, the tire according to each of the examples has a shorter lap time than that according to each of the comparative examples. The reason is that the tire according to each of the examples is excellent in a straight running stability and a cornering performance.

From the results of the evaluation shown in the Tables 1 and 2, the advantages of the present invention are apparent. The tire according to the present invention can be attached to various motorcycles. The tire is particularly suitable for a motorcycle for a race.

The above description is only illustrative and various changes can be made without departing from the scope of the present invention, as defined by the appended claims.

## Claims

1. A radial tire (2) for a motorcycle comprising a tread (4) having an external surface to form a tread surface, a pair of sidewalls (6) extended almost inward in a radial direction from an end of the tread, a pair of beads (8) extended almost inward in the radial direction from the sidewalls, a carcass (10) laid between both of the beads along insides of the tread and the sidewalls, and a belt (12) laminated on the carcass at an inside of the tread in the radial direction,
wherein the carcass (10) includes a carcass cord having an angle with respect to a circumferential direction which is equal to or greater than 40 degrees and is equal to or smaller than 90 degrees,
a ratio of a width (W_{b}) of the belt to that of the tread (Wₜ) is equal to or higher than 80% and is equal to or lower than 100%,
the belt (12) includes a first belt ply (28), a second belt ply (30) positioned on an outside in the radial direction of the first belt ply, and a third belt ply (32) positioned on an outside in the radial direction of the second belt ply,
the first belt ply (28) includes a first cord (34) having an angle α with respect to the circumferential direction which is equal to or greater than 15 degrees and is equal to or smaller than 40 degrees,
the second belt ply (30) includes a second cord (38) having an angle β with respect to the circumferential direction which is equal to or greater than 15 degrees and is equal to or smaller than 40 degrees and inclined in a reverse direction to the first cord about an equator plane, **characterized in that**
the third belt ply includes a third cord wound spirally and extended substantially in the circumferential direction.

2. The tire according to claim 1, wherein the carcass cord is formed by a nylon fiber or a polyethylene naphthalate fiber, the first cord (34) and the second cord (38) are formed by the nylon fiber, an aramid fiber, a glass fiber or a carbon fiber, and the third cord (42) is formed by the aramid fiber, the carbon fiber or steel.

3. The tire according to claim 1, wherein a width (W₂) of the second belt ply (30) is greater than that (W₁) of the first belt ply (28), a width (W₃) of the third belt ply (32) is greater than that (W₂) of the second belt ply (30), a whole surface of the first belt ply is covered with the second belt ply, and a whole surface of the second belt ply is covered with the third belt ply.

## Patentansprüche

1. Radialreifen (2) für ein Motorrad, umfassend eine Lauffläche (4) mit einer äußeren Oberfläche, um eine Laufflächen-Oberfläche zu bilden, ein Paar Seitenwände (6), die sich nahezu nach innen in einer radialen Richtung von einem Ende der Lauffläche erstrecken, ein Paar Wülste (8), die sich nahezu nach innen in der radialen Richtung von den Seitenwänden erstrecken, eine Karkasse (10), die zwischen beiden Wülsten entlang Innenseiten der Lauffläche und den Seitenwänden gelegt ist, und einen Gürtel (12), der auf die Karkasse an einer Innenseite der Lauffläche in der radialen Richtung laminiert ist,
wobei die Karkasse (10) einen Karkasskord umfasst, der einen Winkel in Bezug auf eine Umfangsrichtung aufweist, der gleich ist oder größer als 40° ist und gleich oder kleiner als 90° ist,
ein Verhältnis einer Breite (Wb) des Gürtels zu der der Lauffläche (Wt) gleich oder höher als 80 % ist und gleich oder niedriger als 100 % ist,
der Gürtel (12) eine erste Gürtellage (28), eine zweite Gürtellage (30), die an einer Außenseite in der radialen Richtung der ersten Gürtellage angeordnet ist, und eine dritte Gürtellage (32) umfasst, die an einer Außenseite in der radialen Richtung der zweiten Gürtellage angeordnet ist,
die erste Gürtellage (28) einen ersten Kord (34) umfasst, der einen Winkel (α) in Bezug auf die Umfangsrichtung aufweist, der gleich oder größer als 15° ist und gleich oder kleiner als 40° ist,
die zweite Gürtellage (30) einen zweiten Kord (38) umfasst, der einen Winkel (β) in Bezug auf die Umfangsrichtung aufweist, der gleich oder größer als 15° ist und gleich oder kleiner als 40° ist und in einer umgekehrten Richtung zu dem ersten Kord um eine Äquatorebene geneigt ist,
**dadurch gekennzeichnet, dass**
die dritte Gürtellage einen dritten Kord umfasst, der spiralförmig gewickelt ist und sich im Wesentlichen in der Umfangsrichtung erstreckt.

2. Reifen nach Anspruch 1,
wobei der Karkasskord durch eine Nylonfaser oder eine Polyethylennaphthalatfaser gebildet ist, wobei der erste Kord (34) und der zweite Kord (38) durch die Nylonfaser, eine Aramidfaser, eine Glasfaser oder eine Kohlefaser gebildet sind, und der dritte Kord (42) durch die Aramidfaser, die Kohlefaser oder Stahl gebildet ist.

3. Reifen nach Anspruch 1,
wobei eine Breite (W2) der zweiten Gürtellage (30) größer als die (W1) der ersten Gürtellage (28) ist, eine Breite (W3) der dritten Gürtellage (32) größer als die (W2) der zweiten Gürtellage (30) ist, eine Gesamtfläche der ersten Gürtellage mit der zweiten Gürtellage bedeckt ist, und eine Gesamtfläche der zweiten Gürtellage mit der dritten Gürtellage bedeckt ist.

## Revendications

1. Bandage radial (2) pour une moto, comprenant une bande de roulement (4) ayant une surface externe pour former une surface de bande de roulement, une paire de parois latérales (6) s'étendant presque vers l'intérieur dans une direction radiale à partir d'une extrémité de la bande de roulement, une paire de talons (8) étendus presque vers l'intérieur dans la direction radiale à partir des parois latérales, une carcasse (10) posée entre les deux talons le long des intérieurs de la bande de roulement et des parois latérales, et une ceinture (12) laminée sur la carcasse au niveau d'un intérieur de la bande de roulement dans la direction radiale,
dans lequel la carcasse (10) comprend une corde de carcasse ayant un angle par rapport à une direction circonférentielle qui est égal ou supérieur à 40 degrés et est égal ou inférieur à 90 degrés,
un rapport d'une largeur (Wb) de la ceinture sur celle de la bande de roulement (Wt) est égal ou supérieur à 80 % et égal ou inférieur à 100 %,
la ceinture (12) comprend un premier pli de ceinture (28), un deuxième pli de ceinture (30) positionné sur un extérieur dans la direction radiale du premier pli de ceinture, et un troisième pli de ceinture (32) positionné sur un extérieur dans la direction radiale du deuxième pli de ceinture,
le premier pli de ceinture (28) comprend une première corde (34) ayant un angle α par rapport à la direction circonférentielle qui est égal ou supérieur à 15 degrés et est égal ou inférieur à 40 degrés,
le second pli de ceinture (30) comprend une seconde corde (38) ayant un angle β par rapport à la direction circonférentielle qui est égal ou supérieur à 15 degrés et est égal ou inférieur à 40 degrés et est incliné dans une direction inverse par rapport à la première corde autour d'un plan d'équateur, **caractérisé en ce** qui :
le troisième pli de ceinture comprend une troisième corde enroulée en spirale et étendue sensiblement dans la direction circonférentielle.

2. Bandage selon la revendication 1, dans lequel la corde de carcasse est formée par une fibre de nylon ou une fibre de polyéthylène naphtalate, la première corde (34) et la seconde corde (38) sont formées par la fibre de nylon, une fibre d'aramide, une fibre de verre ou une fibre de carbone, et la troisième corde (42) est formée par la fibre d'aramide, la fibre de carbone ou de l'acier.

3. Bandage selon la revendication 1, dans lequel une larguer (W₂) du deuxième pli de ceinture (30) est supérieure à celle (W₁) du premier pli de ceinture (28), une largeur (W₃) du troisième pli de ceinture (32) est supérieure à celle (W₂) du deuxième pli de ceinture (30), toute la surface du premier pli de ceinture est recouverte avec le deuxième pli de ceinture, et toute la surface du deuxième pli de ceinture est recouverte par le troisième pli de ceinture.
